# EUROPÄISCHE PATENTANMELDUNG

(11) **EP 1 857 712 A1**
(43) Veröffentlichungstag der Anmeldung: **21.11.2007**
(21) Anmeldenummer: 07008957.8
(22) Anmeldetag: 03.05.2007
(51) Int. Cl.: F16H 57/08

(54) **Planetenrad mit Hartmetallbolzen**

(30) Priorität: 17.05.2006 DE 102006023390
(71) Anmelder: IMS Gear GmbH, 79871 Eisenbach (DE)
(72) Erfinder: Hagedorn, Heinz Gert, 78628 Rottweil (DE)
(74) Vertreter: Göhring, Robert

(57) **Zusammenfassung**

Umlauf-Zahnradgetriebe mit mindestens zwei miteinander kämmenden Zahnrädern, von denen eines ein mittels einer Lagerung auf einem Bolzen drehbar gelagertes umlaufendes Zahnrad ist, dadurch gekennzeichnet, dass der Bolzen ein Hartmetallbolzen (40) ist.
Mit der vorliegenden Erfindung wird die Lebensdauer des Zahnradgetriebes erhöht.

## Beschreibung

Die Erfindung betrifft ein Umlauf-Zahnradgetriebe mit mindestens zwei miteinander kämmenden Zahnrädern, von denen eines ein mittels einer Lagerung auf einem Bolzen drehbar gelagertes umlaufendes Zahnrad ist.

Umlauf-Zahnradgetriebe sind z.B. Planetengetriebe. Die umlaufenden Räder, die Planetenräder, sind auf Bolzen gelagert. Eine Lagerung der Planetenräder auf den Bolzen mittels Nadellagern erfordert einen großen Durchmesser des Planetenrades und damit auch einen großen Durchmesser des gesamten Planetengetriebes. Die minimale Baugröße eines derartigen Planetengetriebes wird damit nicht durch die zu übertragende Leistung, sondern durch den Bauraum der Nadellager bestimmt. Ein derartiges Planetengetriebe ist daher häufig überdimensioniert.

Bei einer Ausführung des Planetengetriebes mit einer Gleitlagerung zwischen dem Planetenrad und dem Bolzen besteht das Problem, eine ausreichende Schmierung der Lagerung sicherzustellen.

Der Betrieb des Planetengetriebes beispielsweise mit einem elektrisch kommutierten Motor kann zu Drehmomentschwankungen auf der Antriebsseite führen. Diese Schwankungen bewirken Veränderungen der Gleitgeschwindigkeit der Gleitpartner in der Gleitfuge. Dies kann bei Bolzen, die z.B. aus einem Wälzlagerstahl hergestellt sind, einen starkem Verschleiß bewirken und damit zum Ausfall des Planetengetriebes führen.

Versuche mit Bolzen aus Aluminiumoxidkeramik erbrachten kein befriedigendes Ergebnis. Derartige Bolzen weisen zwar eine hohe Härte auf, sie neigen jedoch bei Schwankungen der Belastung zum Bruch.

Die Aufgabe der vorliegenden Erfindung ist es daher, die Lebensdauer des Umlauf-Zahnradgetriebes zu erhöhen und insbesondere dabei dessen Bruchverhalten zu verbessern.

Diese Aufgabe wird mit den Merkmalen des Hauptanspruchs gelöst. Dazu besteht der Bolzen ein Hartmetallbolzen. Dessen Biegefestigkeit ist vorzugsweise größer 2500 N/mm².

Ein Bolzen aus Hartmetall weist eine Härte auf, die vergleichbar ist mit der Härte von Aluminiumoxidkeramik. Diese Härte ist erheblich höher als die Härte eines Wälzlagerstahls. Gegenüber Aluminiumoxidkeramik weist Hartmetall jedoch einen höheren Elastizitätsmodul und eine höhere Duktilität auf. Die höhere Zähigkeit des Hartmetalls gegenüber der Aluminiumoxidkeramik, verbunden mit der hohen Härte des Werkstoffs, ermöglicht einen verschleißbeständigen Betrieb des einzelnen Gleitlagers und damit eine hohe Lebensdauer des Planetengetriebes.

Weitere Einzelheiten der Erfindung ergeben sich aus den Unteransprüchen und der nachfolgenden Beschreibung einer schematisch dargestellten Ausführungsform.

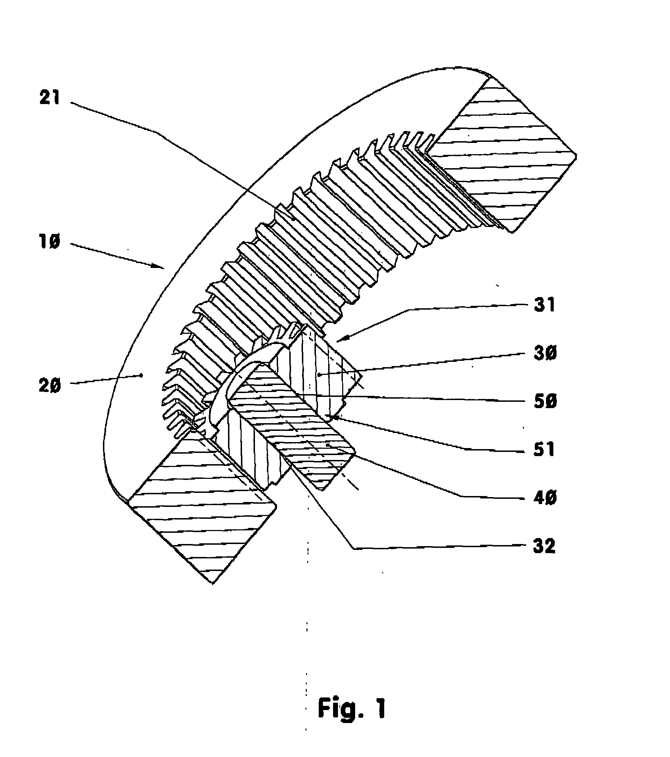

Figur 1: Planetengetriebe.

Die Figur 1 zeigt als Teile eines Stirnrad-Planetengetriebes 10 ein Hohlrad 20 und ein mit dem Hohlrad 20 kämmendes Planetenrad 30. Das Planetengetriebe 10 umfasst beispielsweise ein Hohlrad 20, drei Planetenräder 30, einen Planetenträger und ein Sonnenrad. Das Hohlrad 20, der Planetenträger und das Sonnenrad sind z.B. koaxial zueinander angeordnet. Die Planetenräder 30 sind beispielsweise um jeweils 120 Grad versetzt zueinander auf einem gemeinsamen Teilkreis angeordnet, dessen Durchmesser der Hälfte der Summe der Verzahnungsteilkreise des Hohlrades 20 und des Sonnenrades entspricht. Jedes der Planetenräder 30 ist in diesem Ausführungsbeispiel drehbar auf jeweils einem zentralen Bolzen 40 gelagert. Die Bolzen 40 sind beispielsweise fest mit dem Planetenträger verbunden.

Das einzelne Planetenrad ist z.B. aus Stahl gefertigt und nitriert.

Zur Aufnahme des Bolzens 40 hat das einzelne Planetenrad 30 eine in seiner Längsrichtung orientierte zylindrische Durchgangsbohrung 32. Der Bolzen 40 hat zumindest im Bereich der Planetenradaufnahme einen zylindrischen Querschnitt von beispielsweise 5 Millimetern Durchmesser.

Der Bolzen 40 besteht aus einem Hartmetall. Das Hartmetall ist ein Verbundwerkstoff, der aus Hartstoff, z.B. Wolframcarbid, Tantalcarbid, Titancarbid, etc. und aus einem Bindemittel, z.B. Cobalt besteht. Im Ausführungsbeispiel besteht der Hartmetallbolzen 40 zu 90,5 Massenprozent aus Wolframcarbid und zu 9,5 Massenprozent aus Cobalt. Weitere Hartstoffe sind nicht eingelagert. Das Gefüge ist fremdphasenfrei.

Der Anteil des Hartstoffs oder der Hartstoffe im Werkstoff kann z.B. zwischen 70 Massenprozent und 94 Massenprozent liegen. Dementsprechend liegt der Anteil des Bindemittels zwischen 30 Massenprozent und 6 Massenprozent.

Bei Hartmetallen bestimmt der Anteil des Hartstoffs die Härte des Werkstoffs und die Verschleißeigenschaften. Das Bindemittel verleiht dem Verbundwerkstoff die Zähigkeit. Somit hat der Hartmetallbolzen 40 des Ausführungsbeispiels eine hohe Härte, z.B. 1230 HV, und eine hohe Zähigkeit.

Die Einsatzkorngröße des Hartmetallbolzens 40 beträgt im Ausführungsbeispiel 8 Mikrometer. Der Hartmetallbolzen 40 hat hiermit beispielsweise eine Dichte von 14500 kg/m³. Er erreicht eine Biegefestigkeit von mindestens 2000 N/mm² und vorzugsweise größer 2800 N/mm² und eine Druckfestigkeit von 3800 N/mm².

Soll der Hartmetallbolzen 40 eine hohe Warmfestigkeit aufweisen, kann er beispielsweise außer dem Hartstoff Wolframcarbid mit einen Anteil von bis zu 12 Massenprozent Titancarbid ausgeführt werden. Hierdurch wird jedoch die Wirkung des Bindemittels verringert, was zu einer Verringerung der Zähigkeit führt.

Einen geringeren Einfluss auf die Wirkung des Bindemittels hat z.B. der Einsatz von Tantalcarbid. Dieser Hartstoff kann neben Wolframcarbid beispielsweise bis zu einem Anteil von 8 Massenprozent eingesetzt werden. Hierdurch wird die Wirkung des Bindemittels nur geringfügig verändert, während gleichzeitig die Zähigkeit des Werkstoffs erhöht wird. Hierdurch kann die Betriebssicherheit weiter erhöht werden.

Durch eine Kombination aller drei genannten Hartstoffe und des Bindemittels können die physikalischen Eigenschaften des Hartmetalls gezielt eingestellt werden.

Der Hartmetallbolzen 40 kann auch eine Oberflächenbeschichtung aufweisen. Dies ist beispielsweise eine dünne Schicht aus Titancarbid, Titannitrid oder Titancarbonitrid. Die Schichtstärke beträgt z.B. zwischen 5 Mikrometern und 15 Mikrometern. Diese Beschichtung wird entweder im sogenannten CVD-Verfahren aus der Gasphase abgeschieden oder im PVD-Verfahren mittels Ionen in einem elektrostatischen Feld erzeugt. Von den genannten Beschichtungen haben die Beschichtungen aus Titancarbid und aus Titannitrid die höchste Verschleißbeständigkeit.

Bei der Montage wird das Planetenrad 30 auf den Bolzen 40 geschoben. Der Bolzen 40 und die Durchgangsbohrung 32 haben eine Spielpassung. Nach der Montage werden die Verzahnungen 21, 31 beispielsweise mit einem Fett geschmiert.

Beim Abwälzen der beiden Räder 20, 30 dreht sich das Planetenrad 30 auf dem Bolzen 40. Diese beiden Teile 30, 40 bilden ein Radialgleitlager 50 mit einer Gleit-Lagerung 51.

Beim Betrieb gleitet die Durchgangsbohrung 32 des Planetenrades 30 in Umfangsrichtung auf dem Hartmetallbolzen 40. Die Durchgangsbohrung 32 wird hierbei mit einer Umfangslast, der Hartmetallbolzen 40 mit einer Punktlast belastet. Die Punktlast auf den Hartmetallbolzen 40 wirkt hierbei in radialer Richtung des Planetengetriebes 10. Aufgrund der großen Härte bei gleichzeitig hoher Zähigkeit der Oberfläche des Hartmetallbolzens 40 ist die Oberfläche des Hartmetallbolzens 40 beständig gegen Verschleiß durch diese Druckbeanspruchung.

Beim Betrieb des Planetengetriebes 10 können schlagartig Laständerungen von der Abtriebsseite (Fahren auf Block) auftreten. Hierbei ändert sich das Verhältnis des Abtriebsmoments zum Antriebsmoment des Planetengetriebes 10. Der biegesteife Hartmetallbolzen 40 verhindert hierbei einen Bruck des Bolzens. Zusätzlich trägt beispielsweise eine Nitrierung zumindest der Durchgangsbohrung 32 zu einer widerstandsfähigen Werkstoffpaarung in der Gleitfuge 51 bei.

### Bezugszeichenliste

- 10: Stirnrad-Planetengetriebe, Umlauf-Zahnradgetriebe

- 20: Hohlrad
- 21: Verzahnung

- 30: umlaufendes Zahnrad, Planetenrad
- 31: Verzahnung
- 32: Durchgangsbohrung

- 40: Bolzen, Hartmetallbolzen, Lagerbolzen

- 50: Radialgleitlager
- 51: Gleitfuge

## Patentansprüche

1. Umlauf-Zahnradgetriebe mit mindestens zwei miteinander kämmenden Zahnrädern, von denen eines ein mittels einer Lagerung auf einem Bolzen drehbar gelagertes umlaufendes Zahnrad ist,
**dadurch gekennzeichnet, dass** der Bolzen ein Hartmetallbolzen (40) ist.

2. Umlauf-Zahnradgetriebe nach Anspruch 1,
**dadurch gekennzeichnet, dass** der Werkstoff des Hartmetallbolzens (40) aus Hartmetall und einem Bindemittel besteht.

3. Umlauf-Zahnradgetriebe nach Anspruch 2,
**dadurch gekennzeichnet, dass** der Anteil des Bindemittels größer ist als 9 Massenprozent.

4. Umlauf-Zahnradgetriebe nach Anspruch 2 oder 3,
**dadurch gekennzeichnet, dass** das Bindemittel Cobalt ist.

5. Umlauf-Zahnradgetriebe nach Anspruch 2,
**dadurch gekennzeichnet, dass** das Hartmetall Wolframcarbid ist.

6. Umlauf-Zahnradgetriebe nach den Ansprüchen 4 und 5,
**dadurch gekennzeichnet, dass** die Einsatzkorngröße des Hartmetalls 8 Mikrometer beträgt.

7. Umlauf-Zahnradgetriebe nach Anspruch 6,
**dadurch gekennzeichnet, dass** das Gefüge des Hartmetallbolzens (40) fremdphasenfrei ist.

8. Umlauf-Zahnradgetriebe nach Anspruch 1,
**dadurch gekennzeichnet, dass** die Oberfläche des Hartmetallbolzens (40) mit einer Titannitridschicht oder mit einer Titancarbidschicht beschichtet ist.

9. Umlauf-Zahnradgetriebe nach Anspruch 1,
**dadurch gekennzeichnet, dass** zumindest die Durchgangsbohrung (32) des umlaufenden Rads (30) zur Aufnahme des Hartmetallbolzens (40) nitriert ist.

10. Umlauf-Zahnradgetriebe nach einen der Ansprüche 1 bis 9,
**dadurch gekennzeichnet, dass** der Hartmetallbolzen (40) eine Biegefestigkeit von größer 2500 N/mm² aufweist.

11. Umlauf-Zahnradgetriebe nach einem der Ansprüche 1 bis 10,
**dadurch gekennzeichnet, dass** die Lagerung ein Gleitlager oder Wälzlager (Nadellager, Kugellager) ist.
